Europäisches Patentamt

European Patent Office

Office européen des brevets

(19)

(11) Numéro de publication: **0 345 117 B1**

(12) **FASCICULE DE BREVET EUROPEEN**

(45) Date de publication du fascicule du brevet:
**06.11.91 Bulletin 91/45**

(51) Int. Cl.⁵: **F16L 9/00, F16L 57/00**

(21) Numéro de dépôt: **89401400.0**

(22) Date de dépôt: **23.05.89**

(54) **Gaine pour le transport par gravité de produits granuleux ou pulvérulents notamment dans les sites à silos.**

(30) Priorité: **03.06.88 FR 8807455**

(43) Date de publication de la demande:
**06.12.89 Bulletin 89/49**

(45) Mention de la délivrance du brevet:
**06.11.91 Bulletin 91/45**

(84) Etats contractants désignés:
**AT BE CH DE ES FR GB GR IT LI LU NL SE**

(56) Documents cités:
**FR-A- 2 411 355
GB-A- 2 080 474
US-A- 2 752 950**

(73) Titulaire: **GUERY S.A.R.L.
7, Route de Chemillé La Tourlandry
F-49120 Chemillé (FR)**

(72) Inventeur: **Guerid, Michel
7, Grande Rue La Tourlandry
F-49120 Chemillé (FR)**

(74) Mandataire: **Caunet, Jean et al
Cabinet BEAU DE LOMENIE 55, rue
d'Amsterdam
F-75008 Paris (FR)**

## Description

La présente invention concerne une gaine pour le transport par gravité de produits granuleux ou pulvérulents, notamment dans les sites où se trouvent les silos à grain.

Généralement, ces gaines relient le ou les silos à des installations, par exemple des installations portuaires où il s'agit de charger et de décharger les cales des navires.

Les gaines sont en général constituées par des éléments tubulaires cylindriques raccordés entre eux. Etant donné que ces éléments sont lourds en raison de leur épaisseur, leur montage et leur remplacement posent des problèmes, d'autant plus délicats que les gaines s'étendent dans le vide à des hauteurs élevées, ce qui impose d'utiliser des moyens de levage importants.

Le travail de montage et d'entretien est donc périlleux et coûteux.

En outre, le raccordement des éléments tubulaires est effectué par soudage. S'il s'agit de remplacer un élément usé, un réel danger d'explosion existe étant donné que dans la gaine et le silo, le mélange est, ainsi que cela est bien connu, explosif.

Indépendamment de cela, la section circulaire de la gaine est relativement réduite pour des raisons de manutention et de montage avec des moyens pas trop importants.

Dès lors, le débit de cette gaine est limité et conduit à une immobilisation des navires au port trop longue et onéreuse.

Enfin, lorsqu'une fuite par usure apparaît, le grain étant abrasif, il faut remplacer l'élément défectueux sans attendre et dans les délais les plus brefs. Cela pose un réel problème au niveau de la fabrication sur mesure de l'élément de remplacement et de son raccordement sur le site.

La présente invention a pour but de remédier à ces inconvénients :

— en proposant un mode de construction grâce auquel la section de passage peut être considérablement accrue sans nécessiter de moyens exceptionnels pour le montage ou le remplacement d'éléments,

— en substituant à la soudure qui est dangereuse, un mode d'assemblage sans risque d'explosion et facile à mettre en oeuvre sur place sans danger,

— en standardisant les composants de la gaine pour qu'ils soient stockables et disponibles immédiatement,

— en prévoyant un moyen permettant de maitriser les conséquences de l'usure de certains panneaux.

Le brevet US-A-2.752.950 décrit une gaine de ventilation et de chauffage dont chaque tronçon est constitué par quatre panneaux dont les deux horizontaux supérieur et inférieur sont plans, tandis que les deux verticaux présentent des rebords profilés en S et faisant saillie vers l'intérieur pour s'emboîter sur les bords desdits panneaux horizontaux supérieurs. Par ailleurs, les rebords des panneaux verticaux sont fixés sur les bords des panneaux horizontaux par des vis.

Cette gaine connue qui n'est pas soumise aux risques d'explosion et aux contraintes de réparation de la gaine, objet de la présente demande, présente de nombreux inconvénients.

En particulier, les moyens de fixation des panneaux ne sont que partiellement accessibles, de sorte que leur démontage n'est pas aisé et que s'ils sont grippés, ils doivent être détruits, ce qui peut entraîner une détérioration des panneaux. De plus, le démontage d'un panneau doit nécessairement s'accompagner de celui au moins partiel des panneaux voisins. Par ailleurs, l'étanchéité de la jonction des panneaux d'un même tronçon et de ceux des tronçons contigus n'est pas assurée dans des conditions de sécurité suffisantes, telles qu'elles sont requises pour les gaines de transport des grains ou autres produits. Surtout, aucun moyen n'est décrit, ni suggéré, pour parer aux risques d'usure.

La présente invention, tout en poursuivant le but précité, vise évidemment à remédier à ces inconvénients de la gaine connue, dès lors qu'elle met en oeuvre la combinaison de moyens de cette gaine enseignée par le brevet US-A-2.752.950 et selon laquelle la gaine est constituée, pour une longueur élémentaire, par quatre panneaux indépendants dont deux opposés l'un à l'autre sont plans tandis que les deux autres présentent des rebords appliqués contre les bords des panneaux plans et prépercés ainsi que ces bords pour le passage de moyens de fixation traversant de l'extérieur leurs bords et rebords préalablement mis en contact.

Dans ce but ainsi précisé et conformément à l'invention :

— les rebords sont coplanaires et font saillie vers l'extérieur pour permettre le démontage de l'un quelconque des panneaux en laissant les autres montés,

— les moyens de fixation, tels que des boulons, sont accessibles de l'extérieur par leurs deux extrémités,

— et le panneau situé dans une zone d'abrasion coopère avec un panneau supplémentaire qui lui est sensiblement parallèle pour former un tunnel grâce auquel les effets de l'usure sont considérablement atténués.

Avantageusement, les panneaux à rebords sont les panneaux latéraux.

Suivant une première forme de réalisation, le panneau supplémentaire participant à la constitution du tunnel est disposé à l'extérieur du panneau inférieur soumis à usure et relié à celui-ci par les moyens de fixation aux panneaux latéraux, l'espace libre du tunnel ménagé entre ces panneaux étant mis en communication avec l'extérieur par au moins un passage du panneau extérieur dit panneau de détection.

Des règles longitudinales et transversales d'entretoisement sont interposées entre chaque panneau de détection et le panneau inférieur correspondant pour ménager l'espace libre précité.

Suivant une deuxième forme de réalisation, le panneau supplémentaire participant à la constitution du tunnel dit panneau d'usure est disposé en doublure intérieure du panneau le plus sollicité de façon que des rebords qu'il présente butent contre celui-ci et soient reliés aux panneaux latéraux par des moyens de fixation, ces panneaux formant ainsi un tunnel dont l'ouverture supérieure débouche près du coude de la gaine à protéger.

Lorsque le tronçon à protéger après le coude est moins pentu, le panneau de la gaine protégé par le panneau d'usure est le panneau inférieur.

Lorsque le tronçon à protéger après le coude est plus pentu, le panneau de la gaine protégé par le panneau d'usure est le panneau supérieur.

Les panneaux supplémentaires peuvent être jointifs ; cependant, des passages peuvent être ménagés entre le tunnel à écoulement lent et ladite gaine à écoulement rapide pour ralentir celui-ci par turbulence, ces passages étant délimités en écartant l'un de l'autre certains au moins des panneaux qui délimitent de l'intérieur ledit tunnel.

Selon un mode d'exécution avantageux, les panneaux alignés de la face supérieure et de la face inférieure sont reliés par paire au moyen d'un profilé en U formant couvre-joint et disposé de part et d'autre du joint de ces panneaux de façon que ses rebords s'étendent parallèlement au joint et perpendiculairement auxdits panneaux, les extrémités dudit couvre-joint étant fixées sur ces panneaux et les rebords des panneaux latéraux par les boulons qui les réunissent.

Les panneaux latéraux alignés sont reliés par paire au moyen d'un profilé en U formant couvre-joint et disposé de part et d'autre du joint de ces panneaux de façon que ses rebords soient appliqués contre ceux desdits panneaux latéraux et fixés par les boulons reliant les panneaux entre-eux.

Les couvre-joints de tous les panneaux peuvent être situés en regard.

Les couvre-joints des panneaux de la face supérieure peuvent aussi être disposés en regard des couvre-joints des panneaux de la face inférieure et en quinconce par rapport aux couvre-joints en regard des panneaux latéraux.

Les couvre-joints des panneaux de la face supérieure sont disposés en quinconce par rapport aux couvre-joints des panneaux de la face inférieure et en quinconce par rapport aux couvre-joints en regard des panneaux latéraux.

Une garniture d'étanchéité telle que de la graisse, un cordon en mousse ou autre est posée sur le faible jeu séparant les bords de deux panneaux contigus en prolongement mutuel et entre ces panneaux et le couvre-joint.

Une garniture d'étanchéité telle que de la graisse, un cordon en mousse ou autre est interposée entre les arrondis de pliage des panneaux et ceux des couvre-joints.

Une garniture d'étanchéité telle que de la graisse, un cordon en mousse ou autre est interposée entre chaque rebord et le panneau plan contigu.

Dans ces conditions, chaque panneau peut être démonté indépendamment des autres, très facilement et très rapidement dans les conditions dangereuses dues à leur installation aérienne dans les silos, le reste de la gaine conservant sa rigidité et pouvant rester en place sans soutènement accessoire. Par ailleurs, la gaine est parfaitement étanche et les risques d'explosion se trouvent annihilés pratiquement en totalité. Surtout l'usure des panneaux par le grain ou autre produit en écoulement se trouve considérablement diminuée et lorsque celle-ci apparaît, la réparation peut attendre le moment propice, c'est-à-dire l'arrêt de l'utilisation du silo.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :

— la figure 1 est une perspective montrant une première forme de réalisation de la gaine conforme à l'invention,

— la figure 2 est une coupe longitudinale prise suivant la ligne II-II de la figure 1,

— la figure 3 est une vue analogue à la figure 1 illustrant une deuxième forme de réalisation de la gaine conforme à l'invention,

— la figure 4 est une coupe schématique d'une gaine à deux coudes faisant application de la deuxième forme de réalisation selon la figure 3,

— la figure 5 est une demi-coupe, demi-élévation analogue à la figure 4 représentant à plus grande échelle la réalisation pratique du coude amont de la figure 4,

— la figure 6 est une coupe transversale prise suivant la ligne VI-VI de la figure 5,

— la figure 7 est une section agrandie d'un détail désigné par la flèche F sur la figure 5,

— la figure 8 est une section agrandie d'un autre détail désigné par la flèche G sur la figure 6,

— la figure 9 est une élévation-coupe représentant une variante de réalisation.

La gaine présente une section polygonale de façon à être réalisable par assemblage de panneaux plans.

Dans les formes de réalisation illustrées par le dessin, la section est carrée, mais pourrait être rectangulaire.

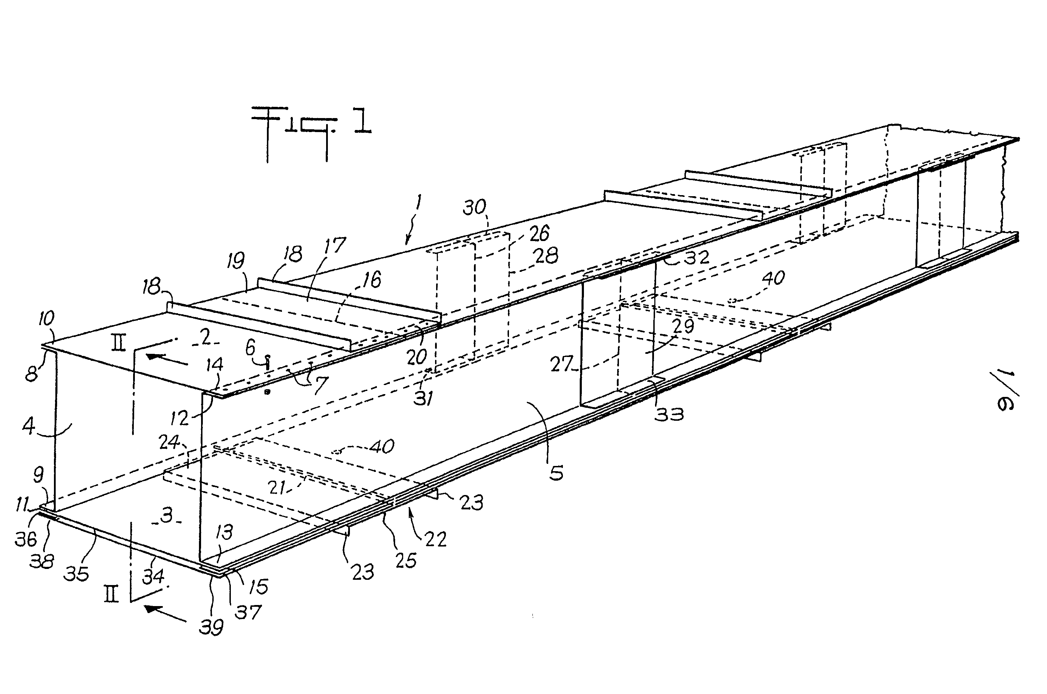

La gaine 1 est alors constituée par un alignement supérieur de panneaux plans 2, un alignement inférieur de panneaux plans 3, un alignement latéral gauche (figure 1) de panneaux plans 4 et un alignement latéral droit de panneaux plans 5. Les panneaux supérieurs 2 et inférieurs 3 sont identiques entre eux y compris dans leurs moyens d'assemblage et par conséquent permutables. De même, les panneaux latéraux gauches 3 et droits 4 sont identiques entre eux et permutables.

Pour l'assemblage des panneaux entre eux, des moyens inertes du point de vue de l'explosion, sont mis en oeuvre et sont susceptibles d'être montés et démontés, facilement et rapidement, de l'extérieur. Dans l'exemple choisi à titre préférentiel mais non limitatif, les moyens d'assemblage sont des boulons 6 traversant des trous 7 percés en regard dans chaque bord longitudinal d'un panneau 2 ou 3 et un rebord correspondant du panneau 4 ou 5 contigu, définissant une arête de la gaine. Pour permettre le montage et le démontage de l'extérieur des boulons ou autres moyens de fixation : rivets, axes à levier de blocage, à dépassement de point mort, etc..., chaque rebord est replié vers l'extérieur.

Dans les formes de réalisation représentées chaque panneau latéral 4 présente deux rebords longitudinaux 8 et 9 contre lesquels sont appliqués les bords 10 et 11 respectivement des panneaux supérieur 2 et inférieur 3 correspondants. De même, chaque panneau latéral 5 présente deux rebords longitudinaux 12 et 13 contre lesquels sont appliqués les bords 14 et 15 respectivement des panneaux supérieur 2 et inférieur 3.

Les panneaux 2 de l'alignement supérieur sont posés bout à bout de façon que leurs bords transversaux mis en contact forment un joint 16. Deux panneaux 2 contigus sont assemblés au moyen d'un couvre-joint 17 disposé symétriquement de part et d'autre du joint 16 ; le couvre-joint 17 est profilé en U et ses rebords 18 faisant saillie vers le haut sont parallèles au joint 16 ; ce couvre-joint 17 est appliqué sur les panneaux contigus 2 et ses bords 19, 20 perpendiculaires aux rebords 18, sont fixés auxdits panneaux 2 par les boulons qui relient les bords 10 et 14 de ceux-ci aux rebords 8 et 12 des panneaux latéraux 4 et 5.

De la même manière, les panneaux 3 de l'alignement inférieur présentent des joints 21 ; ils sont reliés entre eux par des couvre-joints 22 absolument identiques aux couvre-joints 17, couvre-joints qui comportent des rebords 23 faisant saillie vers le bas et des bords de fixation 24 et 25.

Les panneaux 4 de l'alignement latéral gauche sont posés bout à bout de façon à former des joints 26 et les panneaux 5 de l'alignement latéral droit sont également posés bout à bout de façon à former des joints 27. Ces joints 26 et 27 sont coiffés par des couvre-joints 28 et 29 respectivement, présentant des rebords de fixation 30, 31 et 32, 33 qui sont appliqués contre ceux 8, 9 et 12, 13 des panneaux latéraux 4 et 5 et qui sont fixés aux quatre panneaux par leurs boulons se trouvant au même endroit.

Pour améliorer la rigidité de l'ensemble, il peut être avantageux, ainsi que cela ressort de la figure 1, de répartir en quinconce les joints 16, 21 relativement aux joints 26, 27 les joints horizontaux 16, 21 étant situés en regard et les joints descendants 26, 27 étant également situés en regard. En d'autres termes, chaque panneau latéral est disposé à cheval sur les joints des deux paires de panneaux supérieurs et inférieurs contigus et s'étend à mi-longueur de part et d'autre de ces joints.

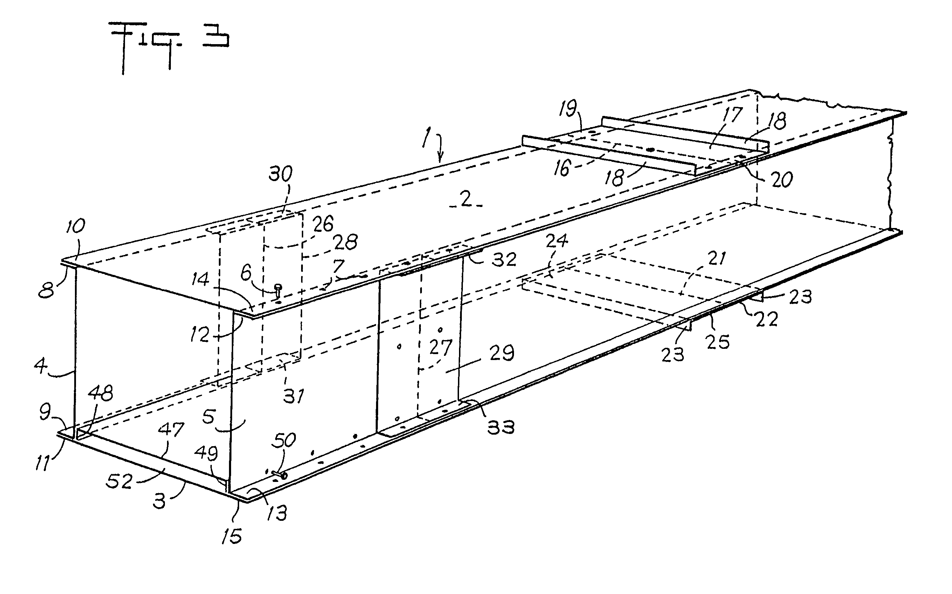

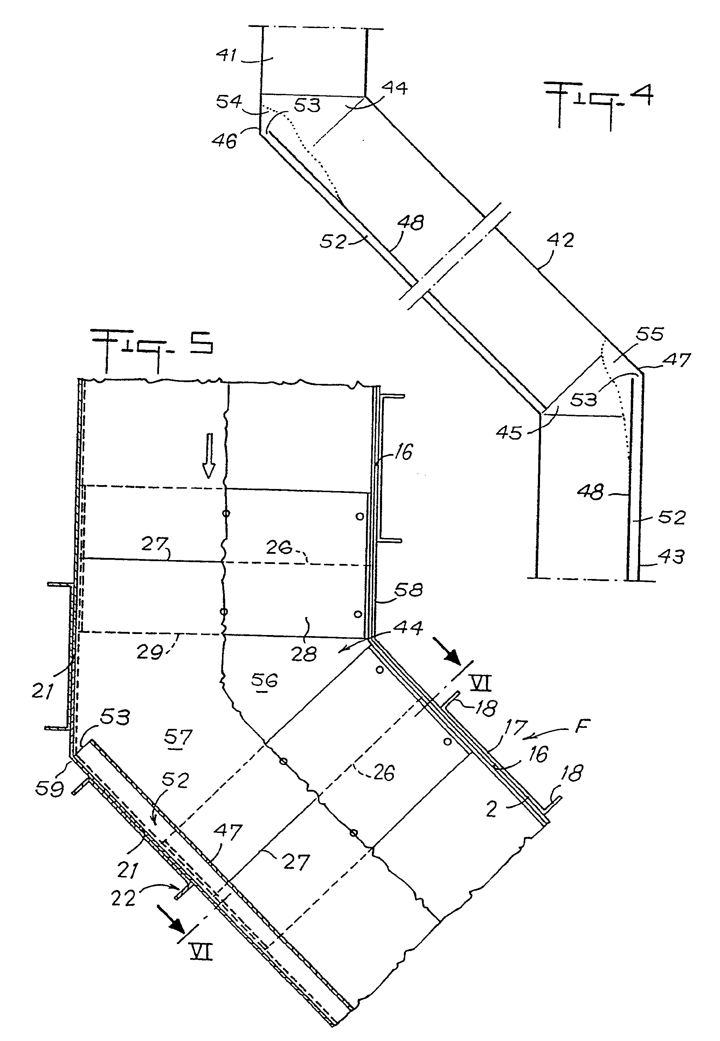

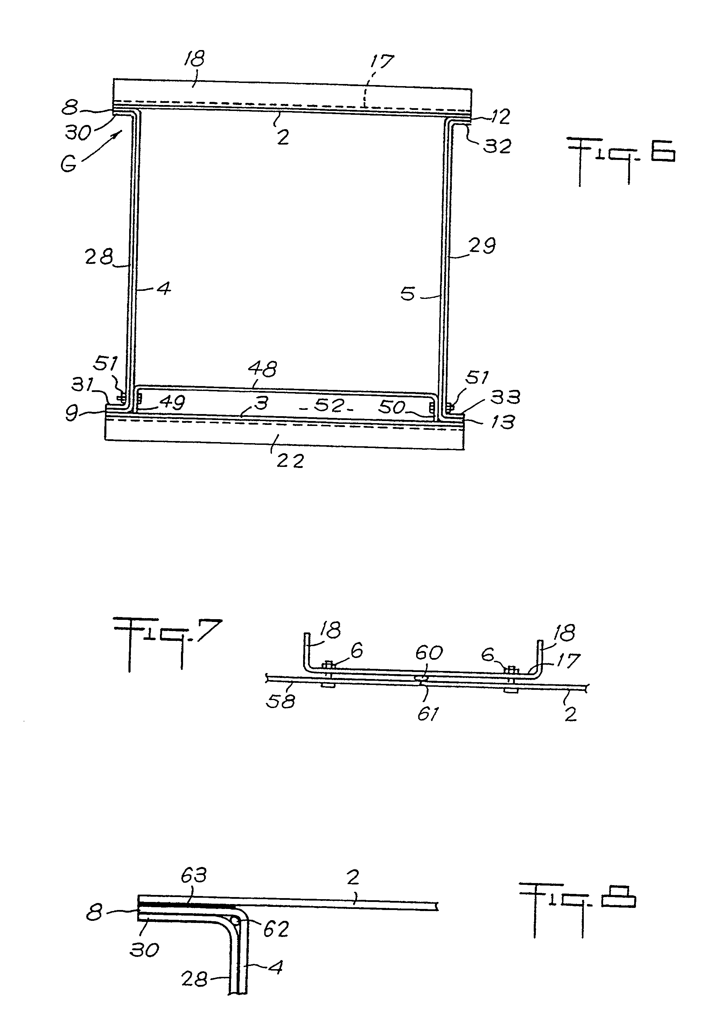

Cette rigidité de la gaine peut être davantage améliorée, ainsi que cela ressort de la figure 5, en répartissant les joints horizontaux 16 et 21 en quinconce les uns par rapport aux autres et en quinconce relativement aux joints descendants 26 qui peuvent toujours être situés en regard des joints descendants 27.

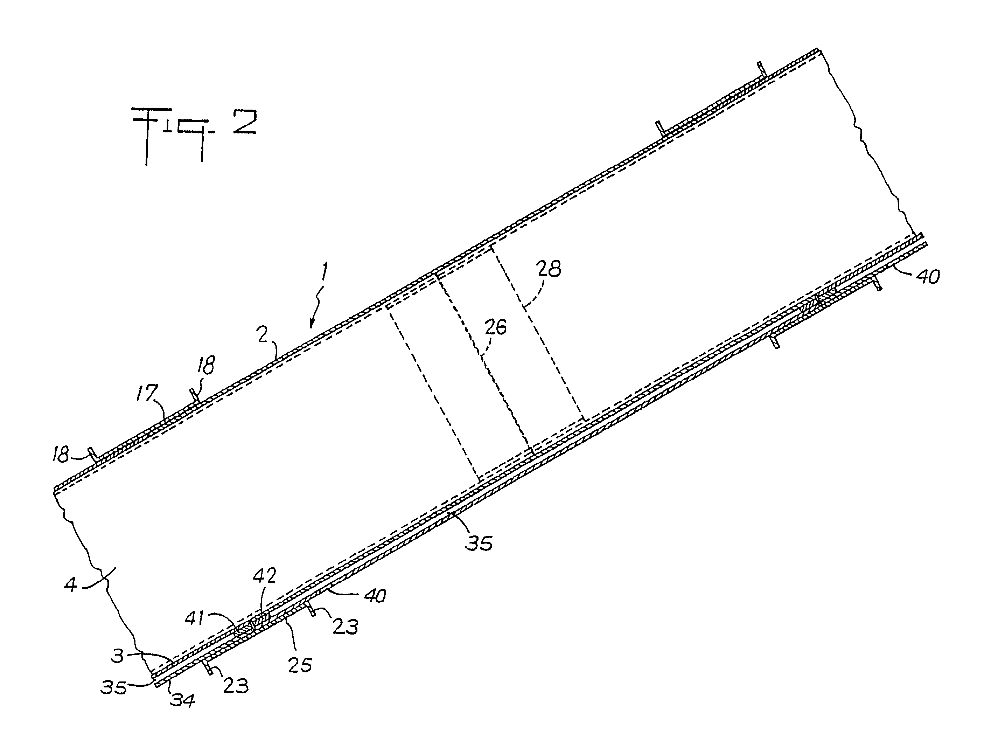

La première forme de réalisation de la gaine illustrée par les figures 1 et 2 met en oeuvre un dispositif de détection du percement par usure des panneaux inférieurs 3. Il comporte un panneau de détection 34 disposé en doublure extérieure de chaque panneau inférieur 3 et à une distance suffisante de celui-ci pour délimiter un espace libre 35. A cet effet, des règles longitudinales d'entretoisement 36 et 37 sont interposées entre les bords 11 et 15 du panneau inférieur 3 et les bords 38 et 39 du panneau de détection 34 ; ce panneau de détection 34 et les règles 36, 37 sont fixées à la gaine par certains au moins des boulons qui relient le panneau inférieur 3 aux rebords 9, 13 des panneaux latéraux 4, 5.

Par ailleurs, au moins un trou 40 (figure 2) est percé dans le panneau de détection 34, de préférence près de l'une de ses extrémités pour se trouver placé à un point bas de la gaine inclinée. Avantageusement, des règles transversales 41 et 42 sont fixées aux extrémités de chaque panneau de détection 34 afin de diviser l'espace libre de l'alignement inférieur en autant de compartiments qu'il existe de panneaux 3.

Si une ouverture apparaît par usure dans le panneau inférieur 3, le produit granuleux véhiculé dans la gaine parvient dans le compartiment de l'espace libre 35 dans lequel débouche cette ouverture et tombe à l'extérieur par le trou 40. Grâce à cette fuite, le personnel d'entretien peut détecter le panneau à remplacer et dispose, du fait que le débit de la fuite est faible, qu'à la rigueur le trou 40 peut momentanément être bouché, d'un délai suffisant pour procéder au remplacement du panneau usé qui peut dès lors se faire pendant un temps mort du fonctionnement de l'installation dans laquelle de telles gaines sont mises en oeuvre.

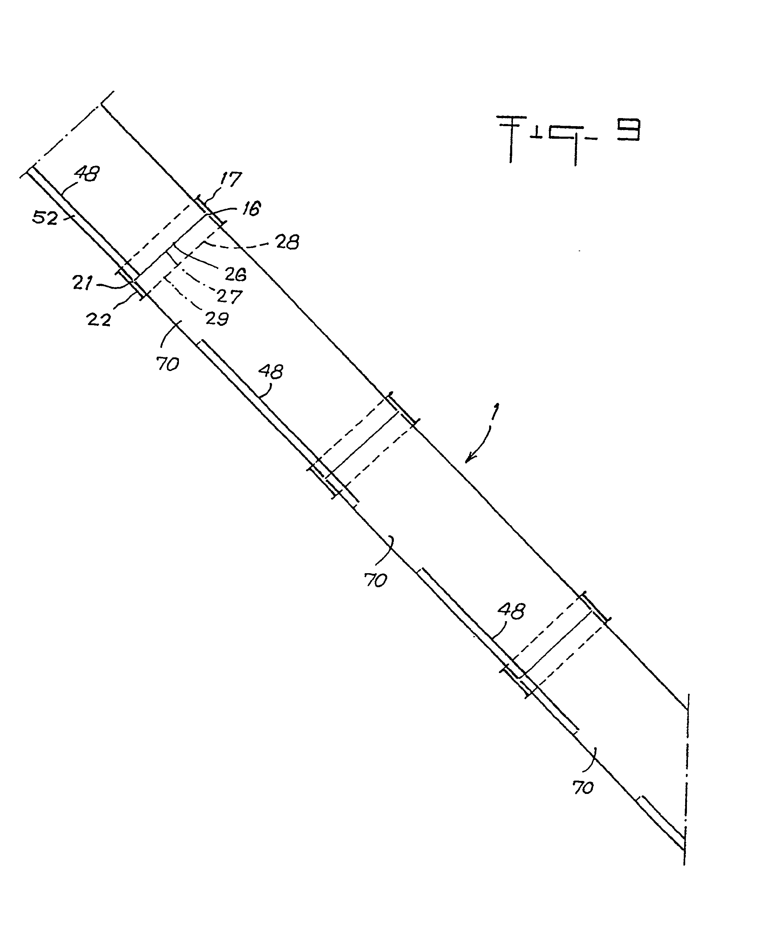

La deuxième forme de réalisation de la gaine illustrée par les figures 3 à 8 met en oeuvre un dispositif réducteur d'usure des panneaux les plus sollicités en abrasion par le grain. Ainsi que cela ressort plus précisément du schéma de la figure 4, la gaine 1 comporte trois tronçons 41 à 43 dont le tronçon intermédiaire 42 moins pentu est relié par un coude amont 44 au tronçon sensiblement vertical 41 d'entrée et par un coude aval 45 au tronçon sensiblement vertical de sortie 43. Il s'agit de protéger la base 46 du coude amont 43 et le panneau inférieur plan 3 du tronçon intermédiaire 41, car le changement de direction de l'écoulement engendre une abrasion dans cette zone et, pour la même raison, il s'agit de protéger le haut 47 du coude aval 45 et le panneau supérieur plan 2 du tronçon de sortie 43.

Cette protection est décrite dans ce qui suit pour le coude amont 44 en se référant aux figures 3 à 8. La gaine 1 du tronçon 41 comporte un panneau d'usure 48 présentant, comme les panneaux latéraux 4, 5, des rebords 49 et 50. Le panneau d'usure 48 est disposé à l'intérieur de la gaine de façon que ses rebords 49, 50 butent contre le panneau plan inférieur 3 et soient appliqués contre les panneaux latéraux 4, 5 auxquels ils sont fixés au moyen de boulons 51.

Ces panneaux 48 et 3 délimitent entre eux un tunnel 52 de section méplate réduite dans lequel la vitesse d'écoulement du grain est beaucoup plus faible que dans la gaine. Dès lors, la corrosion se trouve atténuée et l'usure du panneau 3 réduite. Par ailleurs, l'ouverture supérieure 53 du tunnel 52 débouche près de la base 46 du coude amont 43 et il en résulte à cet endroit un engorgement du grain qui forme un tampon 54 empêchant le grain qui tombe dans le tronçon 41 de frapper et d'user ladite base 46 du coude 43. Le même phénomène se développe pour le tunnel 52 du tronçon 43, tunnel qui débouche pour son ouverture 53 près du haut 47 du coude aval 45 ; un tampon 55 se forme dans ce haut et empêche le grain d'user le coude 45.

La figure 5 montre que le coude 44 comporte deux flancs identiques 56 et 57 ayant la forme de deux trapèzes rectangles accolés par leurs cotés inclinés de façon que leurs côtés parallèles forment un angle plat correspondant à l'angle des tronçons 41 et 42. Ces flancs 56 et 57 s'étendent entre les joints 26 et 27 respectivement. Le coude 44 comporte également un dessus 58 s'étendant entre les joints 16 et en-dessous 59 s'étendant entre les joints 21, ce dessus et ce dessous étant conformés en V suivant l'angle précités.

Dans cette deuxième forme de réalisation, les joints 16, 21, 26 et 27 des faces opposées sont situés en regard, tandis que les joints 16, 21, 26 et 27 des faces contiguës sont disposés en quinconce.

Bien entendu et aussi que cela ressort de la figure 9, ces joints des quatre faces peuvent être situés en regard les uns des autres dans un plan transversal commun.

Par ailleurs, l'écoulement des produits dans la gaine proprement dite s'accélère en raison de la denivellation de celle-ci. Il est avantageux de limiter la vitesse d'écoulement en provoquant des ralentissements en différents points de passage judicieusement choisis.

A cet effet et si l'on se réfère à la deuxième forme de réalisation illustrée par les figures 3 à 8, les panneaux d'usure 48, au lieu d'être jointifs bout à bout, sont écartés les uns des autres en fonction de la configuration de l'installation et du résultat à obtenir. Dans l'exemple représenté, chaque panneau 48 est écarté du suivant et ménage ainsi un passage 70 mettant en communication la gaine 1 dans laquelle les produits s'écoulent à vitesse élevée avec le tunnel 52 dans lequel les produits s'écoulent à vitesse réduite. Ainsi, il se crée à l'endroit des passages 70 des turbulences qui ralentissent et stabilisent l'écoulement dans la gaine.

Dans cet exemple non limitatif, les panneaux mesurent 1 m de long et sont séparés individuellement l'un de l'autre pour un passage mesurant 0,4 m de long. Dans cette disposition, les panneaux d'usure 48 recouvrent les joints précités des panneaux 2 à 5 et assurent une rigidification du montage.

Bien entendu, deux ou plusieurs panneaux d'usure 48 peuvent être jointifs, ce qui accroît le pas des passages 70 et donc des zones turbulentes de ralentissement. En outre, les passages peuvent être plus ou moins longs.

Il est bien évident que la création de passages turbulents 70 s'applique également à la première forme de réalisation selon les figures 1 et 2 entre le tunnel 35 et la gaine 1. Dans ce cas, les panneaux de détection 34 sont jointifs, alors que les panneaux inférieurs 3 sont écartés pour ménager lesdits passages.

Tous les assemblages des coudes et des tronçons sont réalisés grâce à des rebords, des couvre-joints et des boulons. Pour que l'étanchéité soit parfaite afin de parer aux risques d'explosion, des garnitures d'étanchéité sont prévues.

Par exemple, la figure 7 montre qu'un cordon en mousse 60 constituant une garniture d'étanchéité est posé sur le faible jeu 61 qui sépare deux panneaux contigus en prolongement, en particulier le panneau supérieur plan 2 et le dessus cambré 58. Ce cordon est pressé entre lesdits panneaux et le couvre-joint correspondant, 17 en particulier.

La figure 8 montre qu'un cordon en mousse 62 constituant une garniture d'étanchéité est interposé entre l'arrondi intérieur de petit rayon qui relie chaque rebord à son panneau et l'arrondi extérieur de plus grand rayon qui relie chaque rebord à son couvre-joint, par exemple entre l'arrondi du rebord 8 sur le panneau 4 et l'arrondi du rebord 30 sur le couvre-joint 28.

Cette figure 8 montre qu'une couche de graisse 63 constituant une garniture d'étanchéité est interposée entre chaque rebord et le panneau plan contigu, par exemple entre le rebord 8 du panneau latéral 4 et le panneau supérieur 2.

La gaine telle qu'elle est décrite dans ce qui précède est donc facile à monter et à entretenir. Des engins de levage lourds ne sont plus nécessaires et si, comme cela est prévu, des passerelles sont couplées aux gaines, aucun danger de chute du personnel n'est à craindre. Le danger par explosion est annihilé. La section de passage des gaines peut être aussi grande qu'on le désire. Le fonctionnement de l'installation peut n'être interrompu, en cas de fuite par usure, que pendant les temps morts.

**Revendications**

1. Gaine pour le transport par gravité de produits granuleux ou pulvérulents, notamment du grain dans les sites à silos, constituée, pour une longueur élémentaire, par quatre panneaux indépendants (2 à 5) dont deux (2, 3) opposés l'un à l'autre sont plans, tandis que les deux autres (4, 5) présentent des rebords (10, 11, 14, 15) appliqués contre les bords (10, 11, 14, 15) des panneaux plans et prépercés ainsi que ces bords pour le passage de moyens (6) de fixation traversant de l'extérieur leurs bords et rebords préalablement mis en contact, ladite gaine étant caractérisée en ce que :
   — les rebords (10, 11, 14, 15) sont coplanaires et font saillie vers l'extérieur pour permettre le démontage de l'un quelconque des panneaux en laissant les autres montés,
   — les moyens de fixation, tels que des boulons, sont accessibles de l'extérieur par leurs extrémités,
   — et le panneau situé dans une zone d'abrasion coopère avec un panneau supplémentaire qui lui est sensiblement parallèle pour former un tunnel grâce auquel les effets de l'usure sont considérablement atténués.

2. Gaine selon la revendication 1, caractérisée en ce que les panneaux à rebords (10, 11, 14, 15) sont les panneaux latéraux (4, 5).

3. Gaine selon la revendication 1 ou 2, caractérisée en ce que le panneau supplémentaire (34) participant à la constitution du tunnel est disposé à l'extérieur du panneau inférieur soumis à usure (3) et relié à celui-ci par les moyens de fixation aux panneaux latéraux (4, 5), l'espace libre (35) du tunnel ménagé entre ces panneaux étant mis en communication avec l'extérieur par au moins un passage (40) du panneau extérieur (34) dit panneau de détection.

4. Gaine selon la revendication 3, caractérisée en ce que des règles longitudinales (36, 37) et transversales (41, 42) d'entretoisement sont interposées entre chaque panneau de détection (34) et le panneau inférieur (3) correspondant afin de ménager un espace libre fermé (35) dans chaque élément de tunnel.

5. Gaine selon la revendication 1 ou 2, caractérisée en ce que le panneau supplémentaire (48) participant à la constitution du tunnel dit panneau d'usure est disposé en doublure intérieure du panneau le plus sollicité (3 ; 2) de façon que des rebords (49, 50) qu'il présente butent contre celui-ci et soient reliés aux panneaux latéraux (4, 5) par des moyens de fixation, ces panneaux formant ainsi un tunnel (52) dont l'ouverture supérieure (53) débouche près du coude (44 ; 45) de la gaine à protéger.

6. Gaine selon la revendication 5, dont le tronçon (42) à protéger après le coude est moins pentu, caractérisée en ce que le panneau de la gaine protégé par le panneau d'usure (48) est le panneau inférieur (3).

7. Gaine selon la revendication 5, dont le tronçon (43) à protéger après le coude est plus pentu, caractérisée en ce que le panneau de la gaine protégé par le panneau d'usure (48) est le panneau supérieur (2).

8. Gaine selon la revendication 3 ou 5, caractérisée en ce que les panneaux supplémentaires (34 ; 48) sont jointifs.

9. Gaine selon la revendication 3 ou 5, caractérisée en ce que des passages (70) sont ménagés entre le tunnel (35 ; 52) à écoulement lent et ladite gaine (1) à écoulement rapide pour ralentir celui-ci par turbulence, ces passages étant délimités en écartant l'un de l'autre certains au moins des panneaux (3 ; 48) qui délimitent de l'intérieur ledit tunnel.

10. Gaine selon l'une quelconque des revendications 2 à 7, caractérisée en ce que les panneaux alignés de la face supérieure (2) et de la face inférieure (3) sont reliés par paire au moyen d'un profilé en U formant couvre-joint (17, 22) et disposé de part et d'autre du joint (16, 21) de ces panneaux de façon que ses rebords (18, 23) s'étendent parallèlement au joint et perpendiculairement auxdits panneaux, les extrémités (20, 25) dudit couvre-joint étant fixées sur ces panneaux et les rebords (8, 9, 12, 13) des panneaux latéraux (4, 5) par les boulons (6) qui les réunissent.

11. Gaine selon l'une quelconque des revendications 2 à 7, caractérisée en ce que les panneaux latéraux alignés (4, 5) sont reliés par paire au moyen d'un profilé en U formant couvre-joint (28, 29) et disposé de part et d'autre du joint (26, 27) de ces panneaux de façon que ses rebords (30, 33) soient appliqués contre ceux (8, 9, 12, 13) desdits panneaux latéraux et fixés par les boulons (6) reliant les panneaux entre-eux.

12. Gaine selon les revendications 10 et 11, caractérisée en ce que les couvre-joints (16, 21, 26 et 27) des quatre alignements de panneaux sont situés en regard.

13. Gaine selon les revendications 10 et 11, caractérisée en ce que les couvre-joints (17) des panneaux de la face supérieure (2) sont disposés en regard (figure 1) des couvre-joints (22) des panneaux de la face inférieure (3) et en quinconce par rapport aux couvre-joints (28, 29) en regard des panneaux latéraux (4, 5).

14. Gaine selon les revendications 10 et 11, caractérisée en ce que les couvre-joints (17) des panneaux de la face supérieure (2) sont disposés en quinconce (figure 5) par rapport aux couvre-joints (22) des panneaux de la face inférieure (3) et en quinconce par rapport aux couvre-joints (28, 29) en regard des panneaux latéraux.

15. Gaine selon l'une quelconque des revendications 1 à 14, caractérisée en ce qu'une garniture d'étanchéité telle que de la graisse, un cordon en mousse ou autre est posée sur le faible jeu séparant les bords de deux panneaux contigus en prolongement mutuel et entre ces panneaux et le couvre-joint.

16. Gaine selon l'une quelconque des revendications 1 à 14, caractérisée en ce qu'une garniture d'étanchéité telle que de la graisse, un cordon en mousse ou autre est interposée entre les arrondis de pliage des panneaux et ceux des couvre-joints.

17. Gaine selon l'une quelconque des revendications 1 à 14, caractérisée en ce qu'une garniture d'étanchéité telle que de la graisse, un cordon en mousse ou autre est interposée entre chaque rebord et le panneau plan contigu.

## Patentansprüche

1. Hüllrohr für den Transport von körnigen oder pulverförmigen Produkten mittels Schwerkraft, insbesondere von Getreide auf Silogelände, bestehend aus vier unabhängigen Platten (2 bis 5) über eine Grundlänge, von denen zwei einander gegenüberliegende (2, 3) plan sind, während die beiden anderen (4, 5) Flansche (8, 9, 12, 13) aufweisen, die an den Rändern (10, 11, 14, 15) der planen Platten anliegen und vorgebohrt sind so wie diese Ränder für den Durchtritt von Befestigungsmitteln (6), die von außen durch ihre zuvor in Kontakt gebrachten Ränder und Flansche gehen, welches Hüllrohr dadurch gekennzeichnet ist, daß

— die Flansche (8, 9, 12, 13) koplanar sind und nach außen abstehen, um den Ausbau irgendeiner der Platten unter Stehenlassen der anderen zu ermöglichen,
— die Befestigungsmittel, wie Bolzen, über ihre Enden von außen zugänglich sind,
— und die in einer Verschleißzone befindliche Platte mit einer zu dieser im wesentlichen parallelen zusätzlichen Platte zur Bildung eines Tunnels, dank dessen die Abnutzungseffekte erheblich abgeschwächt werden, zusammenwirkt.

2. Hüllrohr nach Anspruch 1, dadurch gekennzeichnet, daß die Platten mit den Flanschen (8, 9, 12, 13) die Seitenplatten (4, 5) sind.

3. Hüllrohr nach Anspruch 1 oder 2, dadurch gekennzeichnet, daß die an der Bildung des Tunnels mitwirkende zusätzliche Platte (34) außerhalb der unteren Verschleißplatte (3) angeordnet und durch die Befestigungsmittel an den Seitenplatten (4, 5) mit dieser verbunden ist, wobei der zwischen diesen Platten befindliche freie Raum (35) des Tunnels durch mindestens einen Durchtritt (40) der äußeren Platte (34), genannt Detektionsplatte, mit Außen kommuniziert.

4. Hüllrohr nach Anspruch 3, dadurch gekennzeichnet, daß Längsleisten (36, 37) und Querleisten (41, 42) als Distanzstücke zwischen jeder Detektionsplatte (34) und der entsprechenden unteren Platte (3) angeordnet sind, um in jedem Tunnelelement einen geschlossenen Freiraum (35) zu bilden.

5. Hüllrohr nach Anspruch 1 oder 2, dadurch gekennzeichnet, daß die an der Bildung des Tunnels der Verschleißplatte mitwirkende zusätzliche Platte (48), genannt Verschleißplatte, an der am meisten beanspruchten Platte (3 ; 2) als Innenverkleidung derart angeordnet ist, daß darauf befindliche Flansche (49, 50) an jener in Anschlag sind und durch Befestigungsmittel mit den Seitenplatten (4, 5) verbunden sind, welche Platten so ein Tunnel (52) bilden, dessen obere Öffnung (53) knapp bei der Krümmung (44 ; 45) des zu schützenden Hüllrohres mündet.

6. Hüllrohr nach Anspruch 5, bei dem der zu schützende Abschnitt (42) nach der Krümmung weniger geneigt ist, dadurch gekennzeichnet, daß die durch die Verschleißplatte (48) geschützte Platte des Hüllrohres die untere Platte (3) ist.

7. Hüllrohr nach Anspruch 5, bei dem der zu schützende Abschnitt (43) nach der Krümmung mehr geneigt ist, dadurch gekennzeichnet, daß die durch die Verschleißplatte (48) geschützte Platte des Hüllrohres die obere Platte (2) ist.

8. Hüllrohr nach Anspruch 3 oder 5, dadurch gekennzeichnet, daß die zusätzlichen Platten (34 ; 48) aneinander anstoßen.

9. Hüllrohr nach Anspruch 3 oder 5, dadurch gekennzeichnet, daß Durchlässe (70) zwischen dem Tunnel (35 ; 52) mit langsamer Strömung und dem Hüllrohr (1) mit rascher Strömung zum Verlangsamen derselben durch Verwirbelung vorgesehen sind, welche Durchlässe unter Auseinanderhalten von zumindest einigen der Platten (3 ; 48), die den Tunnel von Innen her abgrenzen, begrenzt sind.

10. Hüllrohr nach einem der Ansprüche 2 bis 7, dadurch gekennzeichnet, daß die fluchtenden Platten der Oberseite (2) und der Unterseite (3) paarweise durch ein U-förmiges Profil miteinander verbunden sind, welches eine Fugenabdeckung (17, 22) bildet und beiderseits der Fuge (16, 21) dieser Platten derart angeordnet ist, daß sich ihre Flansche (18, 23) parallel zur Fuge und senkrecht zu diesen Platten erstrecken, wobei die Enden (20, 25) der Fugenabdeckung an diesen Platten und an den Flanschen (8, 9, 12, 13) der Seitenplatten (4, 5) mittels der diese verbindenden Bolzen (6) befestigt sind.

11. Hüllrohr nach einem der Ansprüche 2 bis 7, dadurch gekennzeichnet, daß die fluchtenden Seitenplatten (4, 5) paarweise durch ein U-förmiges Profil miteinander verbunden sind, welches eine Fugenabdeckung (28, 29) bildet und beiderseits der Fuge (26, 27) dieser Platten derart angeordnet ist, daß ihre Flansche (30, 33) an jenen (8, 9, 12, 13) der Seitenplatten anliegen und mittels der die Platten miteinander verbindenden Bolzen (6) befestigt sind.

12. Hüllrohr nach den Ansprüchen 10 und 11, dadurch gekennzeichnet, daß die Fugenabdeckungen (16, 21, 26 und 27) der vier Fluchtlinien von Platten einander gegenüberliegen.

13. Hüllrohr nach den Ansprüchen 10 und 11, dadurch gekennzeichnet, daß die Fugenabdeckungen (17) der Platten der Oberseite (2) gegenüber (Fig. 1) den Fugenabdeckungen (22) der Platten der Unterseite (3) und versetzt zu den Fugenabdeckungen (28, 29) gegenüber den Seitenplatten (4, 5) angeordnet sind.

14. Hüllrohr nach den Ansprüchen 10 und 11, dadurch gekennzeichnet, daß die Fugenabdeckungen (17) der Platten der Oberseite (2) versetzt (Fig. 5) zu den Fugenabdeckungen (22) der Platten der Unterseite (3) und versetzt zu den Fugenabdeckungen (28, 29) gegenüber den Seitenplatten angeordnet sind.

15. Hüllrohr nach einem der Ansprüche 1 bis 14, dadurch gekennzeichnet, daß ein Dichtungsmittel, wie Schmiere, eine Schaumschnur od. dgl., an dem die Flansche zweier in gegenseitiger Verlängerung aneinanderstoßender Platten trennenden Spiel und zwischen diesen Platten und der Fugenabdeckung eingesetzt ist.

16. Hüllrohr nach einem der Ansprüche 1 bis 14, dadurch gekennzeichnet, daß ein Dichtungsmittel, wie Schmiere, eine Schaumschnur od. dgl., zwischen den Falzabrundungen der Platten und jenen der Fugenabdeckungen eingesetzt ist.

17. Hüllrohr nach einem der Ansprüche 1 bis 14, dadurch gekennzeichnet, daß ein Dichtungsmittel, wie Schmiere, eine Schaumschnur od. dgl., zwischen jedem Flansch und der anstoßenden planen Platte eingesetzt ist.

## Claims

1. Ducting for transporting granular or powder substances under gravity, in particular grain on sites having silos, the ducting being constituted over an elementary length by four independant panels (2 to 5) comprising an opposite pair (2, 3) of panels which are plane and two other panels (4, 5) having rims (10, 11, 14, 15) applied against the margins (10, 11, 14, 15) of the plane panels and predrilled as are said margins in order to pass fixing means (6) from the outside passing through the margins and the rims after they have been put into contact, said ducting being characterized in that :

— the rims (10, 11, 14, 15) are coplanar and project outwards in order to enable any one of the panels to be removed while leaving the other panels assembled ;

— the fixing means, such as bolts, have both ends accessible from the outside ;

— and, the panel situated in an abrasion zone cooperates with an additional panel which runs substantially parallel thereto in order to form a tunnel so that the effects of wear are considerably attenuated.

2. Ducting according to claim 1, characterized in that the panels having rims (10, 11, 14, 15) are the side panels (4, 5).

3. Ducting according to claim 1 or 2, characterized in that the additional panel (34) participating in constituting the tunnel is disposed outside the bottom panel subjected to wear (3) and is connected thereto by the fixing means for the side panels (4, 5), with the empty space (35) of the tunnel provided between these panels being put into communication with the outside via at least one passage (40) through the outer panel (34), referred to as the "detection panel".

4. Ducting according to claim 3, characterized in that longitudinal and transverse spacer strips respectively (36, 37) and (41, 42) are interposed between each detection panel (34) and the corresponding bottom panel (3) in order to provide a closed empty space (35) in each tunnel element.

5. Ducting according to claim 1 or 2, characterized in that the additional panel (48) participating in the constitution of the tunnel and referred to as the "wear panel" is disposed as an inner lining over the panel most subject to wear (3, 2) in such a manner that rims (49, 50) on the additional panel come into abutment against said panel most subject to wear and are connected to the side panels (4, 5) by fixing means, said panels thus forming a tunnel (52) whose top opening (53) opens out close to the bend (44, 45) in this ducting to be protected.

6. Ducting according to claim 5, in which the length (42) to be protected after the bend is at a lesser slope, characterized in that the panel of the ducting protected by the wear panel (48) is the bottom panel (3).

7. Ducting according to claim 5, in which the length (43) to be protected after the bend is at a greater slope, characterized in that the panel of the ducting protected by the wear panel (48) is the top panel (2).

8. Ducting according to claim 3 or 5, characterized in that the additional panels (35, 48) come into contact with one another.

9. Ducting according to claim 3 or 5, characterized in that pasages 70 are provided between the slow flow rate tunnel (35, 52) and said high flow rate ducting (1) in order to slow down said high flow rate by turbulence, said passages being delimited by spacing at least some of the panels (3, 48) delimiting the inside of said tunnel apart from one another.

10. Ducting according to any one of claims 2 to 7, characterized in that the aligned panels of the top face (2) and of the bottom face (3) are interconnected in pairs by means of respective join-covering channel section members (17, 22) disposed on either side of the join (16, 21) between the panels so that the rims (18, 23) of said members extend parallel to the joins and perpendicularly to said panels, with the ends (20, 25) of said join-covers being fixed to said panels and the rims (8, 9, 12, 13) of the side panels (4, 5) by the bolts (6) used for interconnecting them.

11. Ducting according to any one of claims 2 to 7, characterized in that the aligned side panels (4, 5) are interconnected in pairs by means of a join-covering (26, 27) channel section member disposed on either side of the joins between said panels in such a manner that the rims (30, 33) of said join-covering members are pressed against the rims (8, 9, 12, 13) of said side panels and are fixed thereto by the bolts (6) interconnecting the panels.

12. Ducting according to any one of claims 10 and 11, characterized in that the join-covering members (16, 21, 26 and 27) of the four alignments of panels are situated facing one another.

13. Ducting according to any one of claims 10 and 11, characterized in that the join-covering members (17) of the panels in the top face (2) are disposed facing (figure 1) the join-covering members (22) of the panels in the bottom face (3), and in that they are staggered relative to the facing join-covering members (28, 29) of the side panels (4, 5).

14. Ducting according to any one of claims 10 and 11, characterized in that the join-covering members (17) of the top face panels (2) are disposed in a staggered configuration (figure 5) relative to the join-covering members (22) of the panels in the bottom face (3), and in a staggered configuration relative to the facing join-covering members (28, 29) of the side panels.

15. Ducting according to any one of claims 1 to 14, characterized in that sealing means such as grease, a run of foam or of other material, is placed on the small clearance between the ends of two contiguous panels that are in line, and between said panels and the join-covering member.

16. Ducting according to any one of claims 1 to 14, characterized in that sealing means such as grease, a run of foam, or of other material, is interposed between the rounded fold lines in the panels and those of the join-covering members.

17. Ducting according to any one of claims 1 to 14, characterized in that sealing means such as grease, a run of foam, or of other material, is interposed between each rim and the contiguous plane panel.

Fig. 1

EP 0 345 117 B1

1/6

Fig. 2

Fig. 3

Fig.4

Fig.5

Fig. 6

Fig. 7

Fig. 8

Fig. 9